# EUROPEAN PATENT SPECIFICATION

(11) **EP 3 146 170 B1**
(45) Date of publication and mention of the grant of the patent: **13.05.2020**
(21) Application number: 15725298.2
(22) Date of filing: 21.05.2015
(51) Int. Cl.: F01M 11/04

(54) **FLUID CONTAINER**
FLÜSSIGKEITSBEHÄLTER
RÉSERVOIR DE FLUIDE

(30) Priority: 21.05.2014 GB 201409083
(43) Date of publication of application: 29.03.2017
(73) Proprietor: Castrol Limited, Reading RG8 7QR (GB)
(72) Inventor: BARNES, Andrew Philip, Norwich Norfolk NR16 2JZ (GB); BRETT, Peter Stuart, Reading Berkshire RG4 7RS (GB); GOODIER, Steven Paul, Reading Berkshire RG8 7QR (GB); O MALLEY, Mark, Norwich Norfolk NR16 2JZ (GB)
(74) Representative: Hamer, Christopher K.
(86) International application number: PCT/EP2015/061331
(87) International publication number: WO 2015/177313

(56) References cited:
- WO-A2-01/53663
- CN-A- 1 198 205
- DE-U1-202006 013 535
- JP-A- H04 362 228
- JP-U- S5 289 516
- US-A- 5 640 936
- US-A- 5 871 068
- US-A1- 2006 032 532

## Description

The invention relates to a replaceable fluid container for an engine.

Engines, such as motor vehicle engines, are provided with fluid circulation systems through which fluid is circulated to assist engine performance by lubricating or removing heat from moving components of the engine, for example. Different parts of the engine may have different lubrication requirements. For example, an area of the engine having a large number of moving parts or rubbing surfaces, such as in or around the engine's crankshaft, may have different lubrication requirements than an area which is exposed to high temperatures and chemical by-products associated with the engine's combustion process, such as areas in or around the engine's cylinder head.

WO 01 /53 663 A2 concerns a removable and disposable oil cartridge device (CT) linked to an internal combustion engine regulating interface (RG) for manually filling or emptying and automatically regulating the engine lubricating oil.

CN1198205A discloses a fluid conversion system comprising a carrying portion and a complementary portion. The system is described as "an amateur self-contained oil conversion system" and comprises three coaxially arranged tanks that are used for storing compressed air, new oil and used oil from a vehicle respectively. The complementary portion is used to refill/empty the three tanks as appropriate for re-use.

Embodiments of the invention address at least some of these problems.

The invention is set out in the appended claims.

Embodiments of the invention will now be described, by way of example only, with reference to the accompanying drawings, in which:
Figure 1 shows a schematic illustration of a vehicle containing a replaceable fluid container;
Figure 2 shows a cross-section through a replaceable fluid container for an engine; and
Figure 3 shows a schematic illustration of a replaceable fluid container coupled to two fluid circulation systems.

Embodiments of the invention provide a replaceable fluid container for supplying a plurality of fluids, in particular a plurality of lubricating fluids, to a plurality of fluid circulation systems of an engine.

Replaceable fluid containers described herein are suitable for supplying a plurality of fluids to an engine having, or having associated with it, a plurality of fluid circulation systems, or an engine have a fluid circulation system comprising a plurality of fluid circulation subsystems. Each of the plurality of fluid circulation systems or subsystems may be configured to circulate fluid around particular area of the engine or, where the engine is a vehicle engine, an ancillary area of a vehicle.

Embodiments of the invention may provide a replaceable fluid container comprising three fluid reservoirs being respectively arranged to provide fluid to a crankshaft fluid circulation system, a cylinder block fluid circulation system and a cylinder head fluid circulation system of an engine when the replaceable fluid container is seated in a dock associated with the engine.

Embodiments of the invention provide a replaceable fluid container arranged to be seated in a dock associated with an engine, such as the engine of a vehicle, the replaceable fluid container comprising plurality of fluid reservoirs, each fluid reservoir having a fluid coupling which is arranged to provide fluidic communication between the reservoir and a corresponding one of a plurality of fluid circulation systems of the engine when the replaceable fluid container is seated in the dock. One of the plurality of fluid circulation systems may be a crankshaft fluid circulation system, another of the plurality of fluid circulation systems may be a cylinder block fluid circulation system and another of the fluid circulation systems may be a cylinder head fluid circulation system. One or more of the plurality of fluid circulation systems may be a fluid circulation for, or associated with, a part of the vehicle other than the engine, and the fluid in the fluid reservoir arranged to supply that fluid circulation system may be an ancillary vehicle fluid, such as a washer fluid.

Fluid reservoirs described herein may each provide a fluid comprising one or more of: an engine oil such as a lubricating and/or heat exchange oil, another lubricating and/or heat exchange fluid, a fluid additive and an ancillary fluid. Each fluid may be selected for its suitability for hydrodynamic applications, its tolerance to combustion environments and chemical by-products of combustion such as soot and residue or to high contact stresses and hydraulic pressures or pressure differentials.

The replaceable fluid container may comprise a plurality of fluid reservoirs in which at least one fluid reservoir provides a fluid which is different to the fluid provided by another fluid reservoir. Each of the fluid reservoirs may provide a different fluid. In examples where three fluid reservoirs are provided, one fluid reservoir may provide a fluid which is particularly suited to a hydrodynamic application and is suitable for circulating in a crankshaft fluid circulation system of an engine, another may provide a fluid which is particularly tolerant to the effects of combustion and is suitable for circulating in a cylinder block fluid circulation system of an engine, and the other may provide a fluid which is particularly tolerant to high contact stress and hydraulic pressure and is suitable for circulating in a cylinder head fluid circulation system of an engine.

The replaceable fluid container may comprise a plurality of fluid reservoirs in which at least one fluid reservoir provides a fluid which is the same as the fluid provided by another fluid reservoir. Each fluid may be the same.

Any of the fluid circulation systems may be fluidically coupled to another of the fluid circulation systems. Fluid circulation between fluidically coupled fluid circulation systems may be controlled by the engine control system or container controller. This may allow, for example, hot fluid from one fluid circulation system to be provided to another fluid circulation system that would benefit from the additional heat or so that the hot fluid may cool.

Each reservoir may have a valve for controlling the supply of its fluid to a fluid circulation system to which it is arranged to be fluidically coupled. A container controller is provided to control operation of the valves, for example by controlling the degree to which each valve is opened or closed, to control the rate or amount of each fluid provide to the corresponding fluid circulation system. The container controller may control the valves in accordance with a control regimen. Such a control regimen may be provided by an operational controller such as an engine control system, or it may be pre-programmed into the container controller or supplied to the container controller at a user interface. The control regime may be selected or modified based on a measurement of a property of one or more of the fluids, such as a measure of viscosity, density, temperature, cleanliness or chemical composition.

The replaceable fluid container may be configured to store identification data indicating, for example, a serial number, manufacturer details, service history data, service regime data, one or more property of one or more of the fluids, the vehicle with which the replaceable fluid container is designed to be used, container history data, engine history data of an engine with which the container has been use, and so on, and may be configured to communicate the identification data to the engine control device. The engine control system may be configured to select a service interval or a fluid control regime for each of the fluid reservoirs of the replaceable fluid container based on identification data received from the container controller. The engine control system may be configured to select, or update, a service interval or control regime based on fluid-quality data provided by one or more sensors located in the engine or the replaceable fluid container or on data provided from elsewhere.

As used herein, the term replaceable fluid container means a container for fluid, which container may be inserted into or removed from a cavity, recess or dock in, adjacent to or coupled with an engine, for example a cavity, recess or dock in a vehicle, which cavity, recess or dock is in, adjacent to or coupled with the vehicle engine.

Embodiments of the invention provide a plurality of fluid reservoirs each configured to supply fluid to a respective fluid circulation system of an engine, wherein each fluid reservoir may be independently docked to the engine. Each fluid reservoir may have its own reservoir controller for communicating with the engine control device or the fluid reservoirs may share a common controller, which may be referred to herein as a container controller.

As used herein, the term fluid refers to a fluid which may be used in a fluid system of an engine or a vehicle, for example a lubricating or heat exchange fluid or an ancillary fluid such as a washer fluid.

The fluid container will contain fluid before being removably seated or docked and remain in place during operation to supply fluid to a fluid circulation system.

The fluid circulation system may be for a vehicle engine. As another possibility, the fluid container may be configured to supply fluid, during operation, to a fluid circulation system associated with an engine other than a vehicle engine or to a reverse engine or generator or a turbine such as a wind turbine.

In the drawings, like reference numerals are used to indicate like elements.

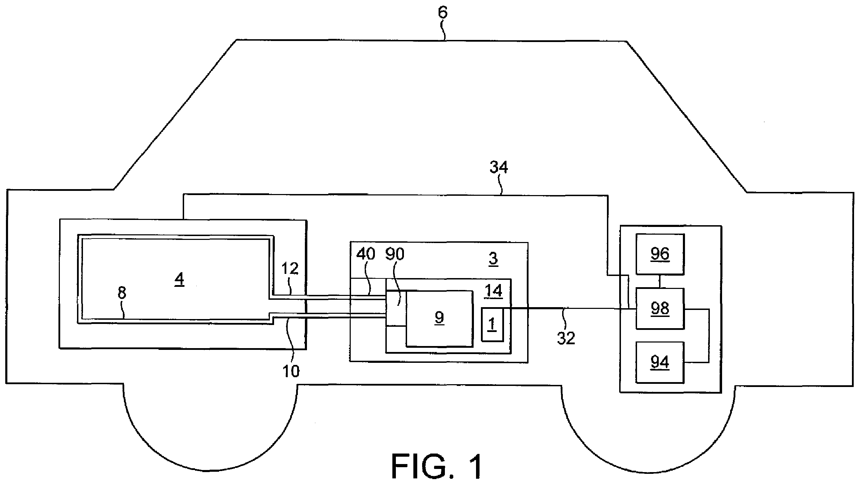

FIGURE 1 shows a vehicle 6 comprising an engine 4, a container dock 3 and an engine control system 2.

The engine 4 comprises a first fluid circulation system 8 and a second fluid circulation system 108 (not shown in Figure 1). The first fluid circulation system 8 comprises a first fluid supply line 10 and a first fluid return line 12. The second fluid circulation system 108 comprises a second fluid supply line 110 and a second fluid return line 112.

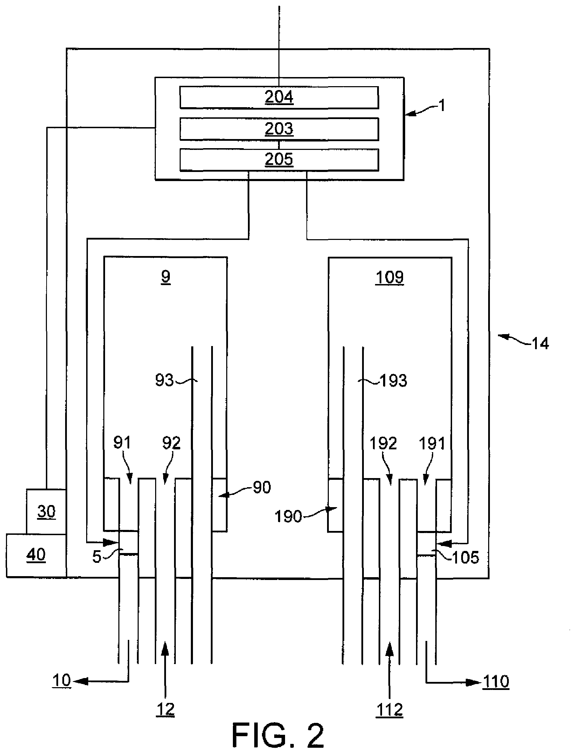

A replaceable fluid container 14 is seated in the container dock 3. The replaceable fluid container 14 comprises a first reservoir 9 for a first fluid and a second reservoir 109 (not shown in Figure 1) for a second fluid. The first reservoir 9 comprises a first fluid coupling 90 adapted to provide fluidic communication between the first reservoir 9 and the first fluid circulation system 8 of the engine 4. The second reservoir 109 is similarly arranged for fluidic communication with a second fluid circulation system 108 of the engine 4 (not shown in Figure 1). As shown in Figure 2, the second reservoir 109 comprises a second fluid coupling 190 adapted to provide fluidic communication between the second reservoir 109 and the second fluid circulation system 108.

The replaceable fluid container comprises a controller 1 to control the supply of the first fluid from the first reservoir 9 to the first fluid circulation system 8 and to control the supply of the second fluid form the second fluid form the second reservoir 109 to the second fluid circulation system 108. The replaceable fluid container 14 comprises a fastening element 40 for securing or retaining the replaceable fluid container 14 in position in the container dock 3.

The replaceable fluid container 14 is shown positioned in the container dock 3 such that the first reservoir 9 is fluidically coupled to the first fluid supply line 10 and the first fluid return line 12 of the first fluid circulation system 8 via the first fluid coupling 90. The first fluid circulation system 8 extends between the first fluid supply line 10 and the first fluid return line 12 such that fluid received into the first fluid supply line 10 may circulate around the first fluid circulation system 8 and be returned to the first reservoir 9 via the fluid return line 12.

The second reservoir 109 and second fluid circulation system 108 (not shown in Figure 1) are similarly arranged.

The engine control system 2 is coupled for communication with the container controller 1 of the replaceable fluid container 14 via the a communication link 32, over which the engine control system 2 may communicate with the container controller 1, for example to receive data relating to the replaceable fluid container 14 or the first and second fluids or to send control signals or data relating to the supply of the first and second fluids. The engine control system 2 is coupled to communicate with, for example to receive operational data from and to send control signals to, the engine 4 via a second communication link 34.

The engine control system 2 comprises a communication interface 98, a processor 96 and a data store 94. The data store 94 is arranged for the exchange of data with the processor 96 and the communication interface 98. The processor 96 is arranged for the exchange of data with the data store 94 and the communication interface 98. The communication interface 98 is arranged for communication with the container controller 1 of the replaceable fluid container 14 and the engine 4.

The processor 96 is configured to compare data stored in the data store 94 with data obtained from the container controller 1 of the replaceable fluid container 14 and from the engine 4.

The engine 4 of the present example is an internal combustion engine of a motor vehicle.

The engine control system 2 is arranged to monitor and control at least one parameter of the engine 4 via the second communication link 34. For example, the processor 96 is configured to control at least one operation of the engine 4 based on the monitoring, and based on control data read from data store 94 of the engine control system 2. The data store 94 stores service interval and/or control regime data relating to the supply of the first and second fluids.

In this example, the communication links 32, 34 are provided by a controller area network (CAN) of the vehicle.

In the illustrated example, the first and second fluid circulation systems 8, 108 are circulation systems for circulating a fluid, such as a lubricating and/or a heat exchange fluid, around respective parts of the engine 4.

In an example, the container dock 3 comprises a cavity adjacent the engine 4 in which the replaceable fluid container 14 may be seated. The container dock 3 comprises couplings to the first fluid supply line 10 and first fluid return line 12 of the first fluid circulation system 8 to enable fluidic communication between the first fluid circulation system 8 and the fluid in the first fluid reservoir 9 and coupling to a second fluid supply line and second fluid return line (not visible in Figure 1) of the second fluid circulation system to enable fluidic communication between the second fluid circulation system and the fluid in the second fluid reservoir when the replaceable fluid container 14 is placed in position. The container dock 3 has a fastening element (not shown) for coupling with a fastening element on the replaceable fluid container 14 to secure the replaceable fluid container 14 in position.

The fastening element 40 may be provided by a locking element, a catch, a latch or a projection or recess configured to engage with a complementary recess or projection on the replaceable fluid container 14. Engagement may comprise forming a frictional or interference fit.

In operation the replaceable fluid container 14 is placed in position in the container dock 3 of the vehicle 6 adjacent the engine 4. When in position, fluidic communication is permitted between the first reservoir 9 and the fluid communication system 8 of the engine 4 and between the second reservoir and the second fluid communication system of the engine 4. When the engine 4 is turned on, the first fluid and/or second fluid is pumped, under the control of the container controller in accordance with control data communicated by the engine control system 2, from the first reservoir 9 of the replaceable fluid container 14, into the first fluid supply line 10 and around the first fluid circulation system 8 and/or from the second reservoir 109 of the replaceable fluid container 14, into the second fluid supply line and around the second fluid circulation system. Circulated first fluid is returned to the replaceable fluid container 14 via the first fluid return line 12 and circulated second fluid is returned to the replaceable fluid container 14 via the second fluid return line.

Placing the replaceable fluid container 14 in position also permits the communication interface of the container controller 1 to communicate with the engine control system 2. This enables the container controller 1 to receive control data from the engine control system 2 over the first communication link 32. The container controller 1 controls the supply of the first fluid to the first fluid circulation system 9 and the supply of the second fluid to the second fluid circulation system in accordance with the control data. The control data may dictate a fluid regime for controlling the supply of the first or second fluid to the corresponding fluid circulation system, for example to control the rate, quantity or duration of supply.

The engine control system 2 receives operational data from the engine 4 and may update the control data based on the operational data, for example in accordance with rules stored in data store 94 of the engine control system 2.

FIGURE 2 shows an example of a replaceable fluid container 14 that may be used in in the vehicle of Figure 1.

The replaceable fluid container 14 comprises a container controller 1, a fastening element 40 and a first reservoir 9, as in Figure 1, and a second reservoir 109.

The first reservoir 9 comprises a first fluid coupling 90 comprises a first fluid outlet port 91, a first fluid inlet port 92 and a first vent port 93 and a first valve 5. The second reservoir 109 comprises a second fluid coupling 190 comprises a second fluid outlet port 191, a second fluid inlet port 192 and a second vent port 193 and a second valve 105.

In other examples, vent ports 93, 193 are not provided. For example, in applications in which the flow rates and aeration of the fluids are sufficiently low that adverse effect on the fluid reservoirs 9, 109 or on the fluid flow properties are not expected, a semi-permeable (e.g., gas permeable but liquid impermeable) vent may be acceptable. For some applications, the fluid reservoirs 9, 109 may function acceptably without any vents or vent ports.

The container controller 1 comprises a data store 203, a driver 205 and communication interface 204. The communication interface 204 is coupled for communication of data with the engine control system 2 and for the exchange of data with the data store 203 and the driver 205. The driver 205 is coupled to receive control signals from the communication interface 204 and to receive control data from the data store 203 and to control opening and closing of the first and second valves 5, 105.

While the driver 205 is illustrated as being provided by the container controller 1, this is not necessary, and in other examples the structure and functionality of the driver 105 is provided by the engine control system 2 or one or more other controllers external to the replaceable fluid container 14.

The first fluid outlet port 91, first fluid inlet port 92 and first vent port 93 are fluidically coupled with the first reservoir 9. The first outlet port 91 is adapted to couple with the engine's first fluid supply line 10. The first fluid inlet port 92 is adapted to couple to the first fluid return line 12. The first vent port 93 is arranged to facilitate the removal of the first fluid from the first reservoir 9 without causing an undesirable pressure condition in the first reservoir 9. The first valve 5 is configured such that closing the first valve 5 isolates the contents of the first reservoir 11 from the first fluid circulation system 8, while opening the first valve 5 places the first reservoir 11 in fluidic communication with the first fluid circulation system 8.

The second fluid outlet port 191, second fluid inlet port 192 and second vent port 93 are fluidically coupled with the second reservoir 19. The second outlet port 191 is adapted to couple with the engine's second fluid supply line 110. The second fluid inlet port 192 is adapted to couple to the second fluid return line 112. The second vent port 193 is arranged to facilitate the removal of the second fluid from the second reservoir 109 without causing an undesirable pressure condition in the second reservoir 109. The second valve 105 is configured such that closing the second valve 105 isolates the contents of the second reservoir 109 from the second fluid circulation system 108, while opening the second valve 105 places the second reservoir 109 in fluidic communication with the second fluid circulation system 108.

The first fluid coupling 90 is arranged such that when the replaceable fluid container 14 is placed in position in the container dock 3, the first fluid outlet port 91 couples with the first fluid supply line 10 of the first fluid circulation system 8 and the fluid inlet port 92 couples with the first fluid return line 12 of the first fluid circulation system 8 such that the first fluid outlet port 91 fluidically couples with the first fluid supply line 10 and the fluid inlet port 92 fluidically couples to the fluid return line 12.

The second fluid coupling 190 is similarly arranged.

The first and second valves 5, 105 are coupled to the driver 205, which is configured to drive opening or closing of the valve in accordance with control signals from the communication interface 204 and/or in accordance with control data read form the data store 203. The valves may be fully opened, fully closed or partially opened. The degree to which each valve is opened affects the rate of flow of fluid from the corresponding reservoir. The driver therefore controls the rate or amount of fluid flow from each of the first and second reservoirs 9, 109 by controlling the valves 5, 105.

The fastening element 40 is arranged for securing or retaining the replaceable fluid container 14 in position to maintain the fluidic coupling between the first reservoir 9 and the first fluid circulation system 8 and between the second reservoir 109 and the second fluid circulation system 108, and a coupling sensor 30 is provided for sensing when the fastening element 40 is engaged to secure the replaceable fluid container 14 in position. The coupling sensor 30 is coupled to communicate with the container controller 1 to indicate that fastening element 40 is engaged.

In other examples, a coupling sensor is not provided. Alternatively, for example, electrical contacts of the communication interface 204 of the replaceable fluid container 14 may be configured to sense the positioning of the container relative to the container dock 3.

The ports 91, 92, 93, 191, 192, 193 of the replaceable fluid container 14 are self-sealing ports which are arranged to form a fluid tight seal with the supply and return lines 10, 12, 101, 120 of the first and second fluid circulation systems 8, 108 respectively when the replaceable fluid container 14 is placed in position in the container dock 3.

The valves 5, 105 of the second reservoir 109 comprise any suitable electronic valve which may be driven by drive electronics (not shown) controller by the driver 205.

The data store 203 of container controller 1 stores identification data for the first and/or second fluid and/or the replaceable fluid container 14 and/or the engine with which the replaceable fluid container 14 is intended to be used. The identifier may be a computer readable identifier, an electronic identifier, such as a near field RF communicator, for example a passive or active RFID tag, or an NFC communicator.

The identification data may comprise data relating to the first or second fluid, for example, where the fluid is an oil, the oil grade and/or type, a unique serial number of the replaceable fluid container 14, the length of time (e.g. number of hours) for which the fluid has been in circulation, the number of miles for which the fluid has been in circulation, the vehicle or engine type with which the replaceable fluid container 14 is intended for use, etc. It may additionally or alternatively comprise data related to an engine usage history, comprising for example mileage, velocity data and service data, of an engine with which the replaceable fluid container 14 has been associated.

In operation, the replaceable fluid container 14 is seated in the container dock 3 and the coupling sensor 30 senses whether the fastening element 40 is engaged to retain the replaceable fluid container 14 in position. If engagement is sensed, the coupling sensor 30 communicates the same to the container controller 1. The container control 1 communicates the same to the engine control system 2 over the communication link 32. In response, the engine control system 2 communicates control data to the container controller 1 for controlling operation of the valves 5, 105. The driver 205 of the container controller 1 controls opening and closing of the valves 5, 1065 in accordance with the control data to permit or inhibit the supply of the first and second fluids to the corresponding first and second fluid circulation systems 8, 108.

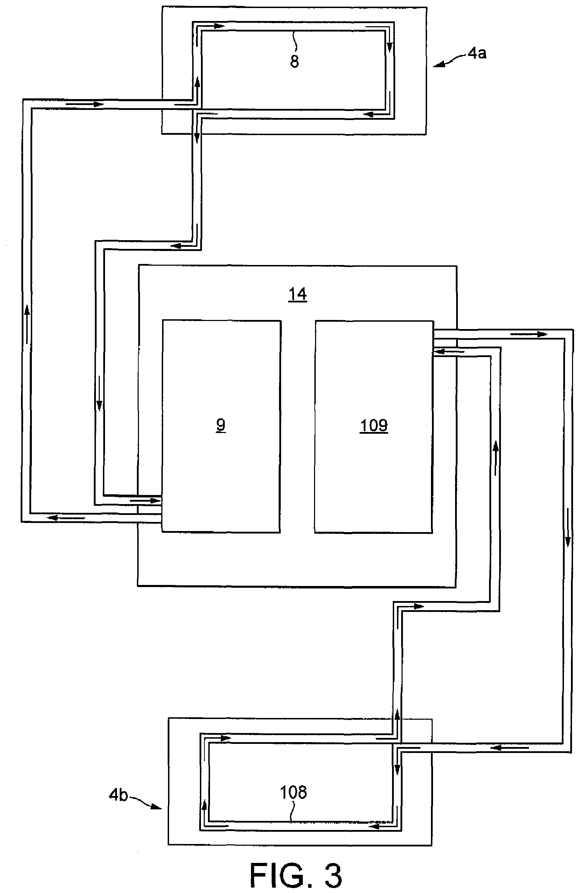

FIGURE 3 shows, schematically, the replaceable fluid container 14 arranged to supply fluid to fluid circulation systems in different parts the engine.

The first fluid reservoir 9 is fluidically coupled to the first fluid circulation system 8, which is a fluid circulation system of a first part 4a of the engine 4. The second fluid reservoir 109 is fluidically coupled to the second fluid circulation system 108, which is a fluid circulation system of a second part 4b of the engine 4.

The first and second parts 4a, 4b of the engine may be respective ones of the crankcase, the cylinder block and the cylinder head of the engine 4. The first and second fluids are selected for suitability with the environments or operational requirements of the corresponding part of the engine. This allows the specialised fluids to be circulated in the different engine environments under separate control, whilst only requiring a single replaceable fluid container.

In an example (not shown), a replaceable fluid container is provided which has first, second and third fluid reservoirs each having a port arranged to provide fluidic communication between that reservoir and a corresponding fluid circulation system of the engine, in which the first fluid circulation system is a crankcase fluid circulation system, the second fluid circulation system is a cylinder block fluid circulation system and the third fluid circulation system is a cylinder head fluid circulation system.

The first, second and third fluid reservoirs have port configurations similar to those shown in Figure 2. The replaceable fluid container may otherwise have the same or similar features as, and be configured to operate in the manner of or a manner similar to, the replaceable fluid container of Figures 1 and 2.

The first fluid reservoir provides a crankcase fluid for the crankcase fluid circulation system. The second fluid container provides a cylinder block fluid for the cylinder block fluid circulation system. The third fluid reservoir provides a cylinder head fluid for the cylinder head fluid circulation system.

In this example, the first, second and third fluids each provide a different fluid, and each of the first, second and third fluids is selected for its suitability for supplying its corresponding fluid circulation system. This enables the supply of a fluid to each fluid circulation system which has properties suited to the environment of that fluid circulation system and the corresponding part of the engine.

In this example, the first reservoir provides a first lubricating engine oil, which is suitable for hydrodynamic lubrication of the crankshaft and connecting rod bearings in the crankcase.

The second reservoir provides a second lubricating engine oil, which is suitable for lubricating the pistons and cylinders in the cylinder block, and which has an acceptable tolerance to the high temperatures and chemical by-products, such as sooty residues, in the region of the cylinder block.

The third reservoir provides a third lubricating engine oil, which is suitable for providing wear protection and friction control for moving parts of the cylinder head and has an acceptable tolerance of high contact stresses and hydraulic pressures or pressure differentials which may be experience in the region of the cylinder head.

Each of the first, second and third fluids may be specifically designed and selected to suit the engine environment and a lubrication regime of the crankshaft fluid circulation system, the cylinder block fluid circulation system and the cylinder head fluid circulation system respectively, for example provide a target bearing film thickness, detergency or stress-wear protection in the respective area of the engine.

Each of the first, second and third reservoirs may be provided with a sensor for sensing a quality indicator of the respective fluid. The sensed quality indicator may comprise one or more of: a temperature, viscosity, density or cleanliness for example by a measurement of an optical property such as transmissibility, opacity, reflectivity or colour, a measurement of an electrical property such as resistance, capacitance or dielectric constant or a physical property such as heat or flow rate of the fluid The sensors may be configured to communicate the quality indicator to the container controller, which may in turn be configured to communicate the quality factor to the engine control system.

The engine control system in this example stores data related to:
- lubrication regimes;
- operational conditions of the first, second and third fluid circulation systems;
- lubrication requirements of the first, second and third fluid circulation systems;
- data relating to properties of the first, second and third lubricating engine oils, for example optimal operational properties of the fluids, such as temperature, density, viscosity of cleanliness; and
- in examples where quality indication data is received from the container controller or elsewhere, that quality indication data.

The data store of the engine control system may have look-up or association tables for associating any of the above data so that engine control system may select an appropriate lubrication regime, given the operational requirements and theoretical or measured conditions of each fluid circulation system and/or theoretical or measured properties of the fluid circulating in that system. The engine control system may additionally or alternatively store algorithms for selecting or changing a lubrication regime, for example based on operational data such as sensed quality indicators of one or more of the fluids.

In this example, each lubrication regime provides a regime for opening and closing the valves of the fluid reservoirs to control the rate or quantity of fluid supplied by each fluid reservoir to its respective fluid circulation system. The lubrication regimes could additionally or alternatively, comprise other steps such as performing a service operation, such as a filtration, on one of the fluids.

The engine control device is configured to communicate a selected lubrication regime for each of the fluid reservoirs to the container controller. The container controller is configured to control the valve of each fluid reservoir and/or to perform a service operation on the fluid in accordance with the selected lubrication regime.

It will be understood that any of the replaceable fluid containers described herein, or any of the components of the fluid containers of fluid reservoirs described herein, may provide part of a fluid reservoir system for an engine, for example the engine of a vehicle.

As used herein, referenced to fluid communication systems include fluid communication subsystems.

Fluid circulation systems described herein may be any fluid circulation system or fluid line with which the replaceable fluid container is associated

Replaceable fluid containers described herein may be used to supply fluid circulation systems or fluid lines associated with any of: oil circulation systems on a vehicle such as circulation systems associated with the vehicle engine or transmission, including those of petrol, diesel, hybrid and electrical vehicles.

Fluid reservoirs described herein may be housed within a common housing and share a common dock, or may be provided with separate couplings for independently docking to an engine.

While embodiments described herein describe vent ports 93, 193 in the fluid couplings 90, 190, in applications where in other applications, semi-permeable vents or not vents or vent ports may be provided. In particular, fluid reservoirs described herein may perform acceptably, i.e., maintain their structural integrity to an acceptable degree, when flow rates and of the fluids are relatively low.

While the illustrated examples describe isolated control of the fluids of respective fluid containers, the fluid couplings and control couplings may be arranged such that fluid from one fluid reservoir may be supplied to or received from more than one of the fluid circulation systems, and any given fluid circulation system may use oil from more than one fluid reservoir.

In some examples, all of the fluids are different, for example have different constituents or compositions. In some examples at least two or the fluids are the same. In some examples at least two of the fluids are different. In some examples all of the fluids are the same for example have the same constituents or compositions.

In some examples, the coupling sensor 30 shown in Figure 2 may be provided on, in or near the container dock 3 or on or in the replaceable fluid container 14.

In an example the container dock 3 or a constituent thereof, such as a base or sleeve of the container dock 3, may be removable from the vehicle 6.

Although the illustrated example shows the engine of a motor vehicle, those skilled in the art will appreciate that a replaceable fluid container 14 as described herein may be used with other types of engine or "reverse engine" such as a generator or turbine, for example a wind turbine.

The replaceable fluid replaceable fluid container 14 may comprise one or more sensor for sensing a quality indicator of one or more of the fluids and sending a signal representing the same to the container controller. The quality indicator may indicate the cleanliness, chemical integrity, chemical composition or viscosity of the fluid. In particular, the quality indicator may indicate at least one property selected from the group consisting of: the viscosity of fluid, the density of fluid, the electrical resistance of fluid, the dielectric constant of fluid, the opacity of fluid, the chemical composition of fluid and combinations of two or more thereof. The quality indicator may be obtained by an optical measurement, for example a transmissibility, opacity, reflectivity or colour measurement, by a measurement of an electrical resistance, capacitance or dielectric constant of the fluid or, particularly when the quality indicator is an indicator of viscosity, by a flow-meter or heat sensor reading.

The replaceable fluid container 14 may be a disposable or recyclable replaceable fluid container 14 which may be replaced by a similar replaceable fluid container 14 after its useful lifetime, for example once its contents has been used or is unusable.

Each fluid may be any type of fluid for circulation in an engine 4 to support a function of the engine. For example, the fluid may be lubricant, a coolant, a de-icer, or combination thereof. The container controller 1 may comprise an identifier of the fluid.

In other examples, the container controller 1 may be configured for one way communication. For example the container controller 1 may be configured only to receive data from the engine control system, so that the data can be provided to the data store 203 of the replaceable fluid container 14. Alternatively the container controller 1 may be configured only to provide data to the engine control system. In some possibilities the container controller 1 may be adapted to provide data to and receive data from the engine control system 2.

While illustrated embodiments herein show the container controller 1 comprising a driver 205 for controlling the supply of fluid from the fluid reservoirs, it will be appreciate that all any control software and/or hardware required to control the supply of fluid from the fluid reservoirs, for example by controlling the valves 2, 105 shown in Figure 2, may instead be provided by the engine control system 2 or another controller separate from the replaceable fluid container 14.

In general, the controller 1 of the replaceable fluid container 14 may comprise only a data store and a communications interface, and any of the control structure or functionality described herein may be provided by one or more external controllers such as the engine control system 2.

In general, the identification data of the replaceable fluid container 14 may comprise an electronic identifier, an optical identifier, such as a barcode, or a colour coded marker, or optical identifier such as a particular colour on the replaceable fluid container 14 or any combination thereof. Regardless of how it is provided, the identifier may be encrypted. In some examples one or both of the first and second communications links 32, 34 may be encrypted and data communicated between the container controller 1 and the engine control system 2 and/or between the engine control system 2 and the engine 4 may be correspondingly encrypted.

In general, the first and second communication links 32, 34 may comprise any wired or wireless communication link, and may comprise an optical link. The communication interfaces 98 and 106 are provided by the vehicle CAN but any suitable interfaces may be provided.

In other example, a fastening element 40 is not provided. The replaceable fluid container 14 may instead be retained in position by gravity or an interference fit, a bayonet coupling or any appropriate fixture, or by the self-sealing ports. In other examples, the ports are not self-sealing but instead self-sealing mechanisms may be provided by the controller dock 3 or controllable seals, such as electrical, electromechanical or mechanical seals may be provided, which may be controllable by the container controller 1 or the engine control system 2. In other examples, manual seals may be provided.

In other examples, a fastening element and associated coupling sensor is provided for each fluid reservoir, and the replaceable fluid container is configured to allow the supply of fluid from a particular container only when a fluid coupling for that container is sensed.

While embodiments described herein show a coupling sensor for sensing whether the replaceable fluid container is positioned in the container dock 3 to permit fluidic communication, it will be appreciated that a coupling sensor need not be provided. Alternatively, for example, electrical contacts of the communication interface 204 of the replaceable fluid container 14 may be configured to sense the positioning of the container relative to the container dock 3.

In general, any sensor described as being provided in the engine may instead be provided in the replaceable fluid container, container dock or fluid circulation system, and vice-versa. Information about the oil quality may be obtained through capacitance or resistivity measurements. These might, for example, indicate the presence of water in the oil or of metallic or carbonaceous particulates suspended in the oil. A sensor for sensing friction as described herein may comprise a flow-meter or a heat sensor.

In the context of the present disclosure, those skilled in the art will appreciate that any of the fluid ports of the fluid reservoirs described herein could comprise any suitable coupling for retaining the a fluid reservoir in fluidic communication with a corresponding fluid circulation system. The port couplings could be arranged to be remotely decoupled from the fluid lines. It will further be appreciated that the replaceable fluid container 14 comprises an actuator to decouple the replaceable fluid container 14 from the fluid circulation system.

In general, one or more functions of any processors described herein, including the described functionality of the container controller 1 and the processor 96 of the engine control system 2 may be provided by any appropriate controller, for example by analogue and/or digital logic, field programmable gate arrays, FPGA, application specific integrated circuits, ASIC, a digital signal processor, DSP, or by software loaded into a programmable general purpose processor. Aspects of the disclosure provide computer program products, and tangible non-transitory media storing instructions to program a processor to perform any one or more of the methods described herein.

In other examples, the data store of the engine control system may additionally or alternatively be provided by a remote or off-vehicle data-store such as a cloud data store. While the communication links 32, 34 shown in the illustrated examples are described as being provided by a CAN of the vehicle, in other the data links are provided by an off-vehicle control network or any appropriate wireless of wired communication link, or any combination thereof.

While in the examples described herein, the fluid circulation systems are fluid circulation systems of or associated with an engine, in particular the engine of a vehicle, the replaceable fluid containers described herein may be used with other fluid systems or fluid circulation systems associated with an engine or a vehicle or a "reverse" engine.

It will be understood that while the fluid circulation systems described herein are illustrated as a closed loop systems, that is systems in which fluid which has circulated is returned to the replaceable fluid container 14, any of the fluid circulation systems could instead be an open loop system in which used or circulated fluid is temporarily or permanently directed elsewhere, for example to a used-fluid collection chamber or reservoir where it may be cooled or cleaned before being reused or, in some examples, removed from the engine. In particular when the fluid is an engine oil, circulated fluid may be collected in a sump before being drained, returned to the replaceable fluid container 14 or scavenged for use elsewhere. While in the illustrated examples, the valves 5, 105 are described as an electronic valves, in other examples, one or more of the valves is a mechanical or electromechanical valve and an appropriate driver is provided. More than one valve may be provided for each fluid reservoir. It will be understood that the engine control system described herein may be considered an operational controller of the engine.

Further details of examples of data providers and examples of fluid containers may be found in International Application No. PCT/EP2013/074209.

Other variations and modifications of the apparatus will be apparent to persons of skill in the art in the context of the present disclosure.

With reference to the drawings in general, it will be appreciated that schematic functional block diagrams are used to indicate functionality of systems and apparatus described herein. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein

The activities and apparatus outlined herein may be implemented using controllers and/or processors which may be provided by fixed logic such as assemblies of logic gates or programmable logic such as software and/or computer program instructions executed by a processor. Other kinds of programmable logic include programmable processors, programmable digital logic (e.g., a field programmable gate array (FPGA), an erasable programmable read only memory (EPROM), an electrically erasable programmable read only memory (EEPROM)), an application specific integrated circuit, ASIC, or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof.

In other examples, the data store of the engine control system may additionally or alternatively be provided by a remote or off-vehicle data-store such as a cloud data store.

While the communication links shown in the illustrated examples are described as being provided by a CAN of the vehicle, in other the data links are provided by an off-vehicle control network or any appropriate wireless of wired communication link, or any combination thereof.

## Claims

1. A replaceable fluid container (14) arranged to be removably seated in a dock (3) to supply fluid associated with an engine (4), the replaceable fluid container (14) comprising:
a plurality of fluid reservoirs (9, 109), wherein each reservoir comprises a fluid port (90, 190) arranged to provide fluidic communication between the reservoir (9, 109) and a corresponding fluid circulation system (8, 108) associated with the engine (4) when the replaceable fluid container (14) is seated in the dock (3);
the replaceable fluid container is **characterised by** further comprising:
a controller (1) configured to control the supply of fluid from one or more of the plurality of reservoirs (9, 109) to the corresponding fluid circulation system (8, 108);
wherein controlling the supply of fluid is based on operational data related to the fluid or the fluid circulation system (8, 108).

2. The replaceable fluid container of claim 1, wherein the fluid held in one of the plurality of reservoirs (9, 109) is different than the fluid held in another of the plurality of reservoirs (9, 109).

3. A fluid reservoir system for a vehicle engine (4), which engine (4) comprises a plurality of fluid circulation systems (8, 108), the reservoir system comprising a container (14), in which the container (14) comprises a plurality of fluid reservoirs (9, 109), each reservoir (9, 109) comprising at least one fluid inlet port (92, 192), at least one fluid outlet port (91, 191) and at least one vent port (93, 193) and in which each of said ports (91, 92, 93, 191, 192, 193) comprises a self-sealing coupling adapted to connect to a corresponding coupling (10, 12, 101, 120) on the vehicle engine to thereby connect each reservoir (9, 109) of said container (14) in fluidic communication with a corresponding fluid circulation system (8, 108) of the engine (4) and in which the reservoir system comprises at least one latch (40) which is adapted to retain the reservoirs (9, 109) of said container (14) in fluidic communication with corresponding vehicle engine fluid circulation systems (8, 108) and the fluid reservoir system being **characterised in that** it is remotely operable to disconnect the reservoirs (9, 109) of the container (14) from said vehicle engine fluid circulation systems (8, 108) and in which the system comprises at least one actuator which is connected to one or more of said latches (40) and is adapted to operate said one or more latches (40).

4. A system as claimed in claim 3 wherein said container (14) is elongate and wherein each set of said inlet (92, 192), outlet (91, 191) and vent ports (93, 193) of each reservoir (9, 109) are located at a common first end of said container (14); and said at least one actuator is operable at a second end of said container (14), distal from said ports (91, 92, 93, 191, 192, 193).

5. A system as claimed in claim 4 in which said at least one actuator comprises an elongate actuator member which comprises first and second ends and extends between said first and second ends of said container (14); and one or more of said latches (40) comprises a collar which is operably connected to said first end of said elongate actuator member by a transverse actuator member.

6. A system as claimed in claim 5 in which said system comprises a single elongate actuator member extending between said first and second ends of said container (14); all of said latches (40) comprise a collar; and all of said collars are operably connected to said first end of said elongate actuator member by a transverse actuator member.

7. A system as claimed in any of claims 3 to 6 wherein said latch (40) is separate from said self-sealing couplings; is biased to a locking position to thereby retain the reservoirs (9, 109) of said container (14) in fluidic communication with said vehicle engine fluid circulation systems (8, 108) and is remotely operable to disconnect said reservoirs (9, 109) of said container (14) from said vehicle engine fluid circulation systems (8, 108).

8. A system as claimed in any of claims 3 to 7 wherein one or more of said self-sealing couplings comprises at least one of said latches (40) which is biased to a locking position to thereby retain the reservoirs (9, 109) of said container in fluidic communication with said vehicle engine fluid circulation systems (8, 108) and is remotely operable to disconnect said reservoirs (9, 109) of said container (14) from said vehicle engine fluid circulation systems (8, 108).

9. A system as claimed in claim 8 which further comprises at least one further latch (40) which is separate from said self-sealing couplings; is biased to a locking position to thereby retain the reservoirs (9, 109) of said container in fluidic communication with said vehicle engine fluid circulation systems (8, 108) and is remotely operable to disconnect the reservoirs (9, 109) of said container (14) from said vehicle engine fluid circulation systems (8, 108).

10. A system as claimed in any of claims 3 to 9 in which said actuator comprises a lever for operating said actuator.

11. A system as claimed in claim 10 which comprises a handle for carrying said system and said lever is pivotably or slideably mounted on said handle.

12. A system as claimed in any one of claims 3, 4 and 8 and 9 in which said actuator comprises at least one electromagnetic member adapted to operate at least one of said latches.

13. A system as claimed in any of claims 3 to 12 in which each of the reservoirs (9, 109) of said container (14) comprises a filter for filtering fluid.

14. A system as claimed in any of claims 3 to 13 in which at least one of said ports (91, 92, 93, 191, 192, 193) comprises a non-return valve.

15. A system as claimed in claim 14 in which said fluid outlet ports (91, 191) comprise a non-return valve.

16. A system as claimed in any of claims 3 to 15 in which each reservoir (9, 109) of the container contains engine lubricating oil composition.

17. A system as claimed in any of claims 3 to 16 in which each reservoir (9, 109) of the container (14) contains a different engine lubricating oil composition.

18. A system as claimed in claim 16 or claim 17 in which said engine lubricating oil composition is a lubricating oil composition for an internal combustion engine.

19. A system as claimed in claim 16 or claim 17 in which the engine lubricating oil composition is a lubricating oil composition for an electric engine.

20. A system as claimed in any one of claims 3 to 16 in which each reservoir (9, 109) of said container contains a heat exchange fluid for an electric engine.

21. A system as claimed in any of claims 3 to 20 wherein the plurality of fluid circulation systems (8, 108) of the engine are selected from a crankcase fluid circulation system, a cylinder block fluid circulation system and a cylinder head fluid circulation system.

22. A system as claimed in claim 21 wherein the container (14) comprises three reservoirs which are in fluidic communication with a crankcase fluid circulation system, a cylinder block fluid circulation system and a cylinder head fluid circulation system, respectively.

23. A system as claimed in claim 21 or claim 22 in which said corresponding ports on said vehicle engine (4) are self-sealing ports.

24. A method of supplying fluid to a vehicle engine (4) comprising a plurality of fluid circulation systems (8, 108), which method comprises connecting to said fluid circulation systems, a fluid reservoir system as claimed in any one of claims 16 to 19.

25. A container assembly, comprising a plurality of replaceable fluid containers (14) each arranged to be removably seated in a dock (3) to supply fluid associated with an engine (4), wherein each replaceable fluid container (14) comprises:
a fluid reservoir (9, 109) comprising a fluid port (90, 190) arranged to provide fluidic communication between the reservoir and a corresponding fluid circulation system (8, 108) associated with the engine (4) when the replaceable fluid container (14) is seated in the dock (3);
the container assembly being **characterized in that** it further comprises:
a controller (1) configured to control the supply of fluid from one or more of the plurality of reservoirs (9, 109) to the corresponding fluid circulation system (8, 108);
wherein controlling the supply of fluid is based on operational data related to the fluid or the fluid circulation system (8, 108).

26. An assembly as claimed in claim 25, wherein the fluid held in the reservoir (9, 109) of each fluid container (14) is different to the fluid held in the reservoir (9, 109) of another fluid container (14).

## Patentansprüche

1. Austauschbarer Fluidbehälter (14), der dafür ausgelegt ist, entfernbar in einem Dock (3) angeordnet zu sein, um einem Motor (4) zugeordnetes Fluid zuzuführen, wobei der austauschbare Fluidbehälter (14) Folgendes umfasst:
eine Vielzahl von Fluidreservoirs (9, 109), wobei jedes Reservoir einen Fluidanschluss (90, 190) umfasst, der dafür ausgelegt ist, eine Fluidverbindung zwischen dem Reservoir (9, 109) und einem entsprechenden Fluidumlaufsystem (8, 108) bereitzustellen, das dem Motor (4) zugeordnet ist, wenn der austauschbare Fluidbehälter (14) im Dock (3) angeordnet ist;
wobei der austauschbare Fluidbehälter durch Folgendes gekennzeichnet ist:
eine Steuerung (1), die dafür konfiguriert ist, die Zufuhr von Fluid von einem oder mehreren der Vielzahl von Reservoirs (9, 109) zu dem entsprechenden Fluidumlaufsystem (8, 108) zu steuern;
wobei das Steuern der Fluidzufuhr auf Betriebsdaten basiert, die sich auf das Fluid oder das Fluidumlaufsystem (8, 108) beziehen.

2. Austauschbarer Fluidbehälter nach Anspruch 1, wobei das Fluid, das in einem der Vielzahl von Reservoirs (9, 109) enthalten ist, sich von dem Fluid unterscheidet, das in einem anderen der Vielzahl von Reservoirs (9, 109) enthalten ist.

3. Fluidreservoirsystem für einen Fahrzeugmotor (4), wobei der Motor (4) mehrere Fluidumlaufsysteme (8, 108) umfasst, wobei das Reservoirsystem einen Behälter (14) umfasst, der Behälter (14) mehrere Fluidreservoire (9, 109) umfasst, jedes Reservoir (9, 109) mindestens einen Fluideinlassanschluss (92, 192), mindestens einen Fluidauslassanschluss (91, 191) und mindestens einen Entlüftungsanschluss (93, 193) umfasst und wobei jeder der Anschlüsse (91, 92, 93, 191, 192, 193) eine selbstdichtende Kupplung umfasst, die zum Verbinden mit einer entsprechenden Kupplung (10, 12, 101, 120) am Fahrzeugmotor ausgelegt ist, um dadurch jedes Reservoir (9, 109) des Behälters (14) in strömungstechnischer Verbindung mit einem entsprechenden Fluidkreislaufsystem (8, 108) des Motors (4) zu verbinden und wobei das Reservoirsystem mindestens eine Verriegelung (40) aufweist, die dafür ausgelegt ist, die Reservoirs (9, 109) des Behälters (14) in Fluidverbindung mit den entsprechenden Fluidumlaufsystemen (8, 108) des Fahrzeugmotors zu halten und das Fluidreservoirsystem **dadurch gekennzeichnet ist, dass** es fernbedienbar ist, um die Reservoirs (9, 109) des Behälters (14) von den Fluidumlaufsystemen (8, 108) des Fahrzeugmotors zu trennen und wobei das System mindestens einen Stellantrieb umfasst, der mit einer oder mehreren der Verriegelungen (40) verbunden ist und dafür ausgelegt ist, die eine oder die mehreren Verriegelungen (40) zu betätigen.

4. System nach Anspruch 3, wobei der Behälter (14) länglich ist und wobei sich jeder Satz der Einlass- (92, 192), Auslass- (91, 191) und Entlüftungsanschlüsse (93, 193) jedes Reservoirs (9, 109) an einem gemeinsamen ersten Ende des Behälters (14) befindet; und der mindestens eine Stellantrieb an einem zweiten Ende des Behälters (14), das von den Anschlüssen (91, 92, 93, 191, 192, 193) entfernt ist, betätigt werden kann.

5. System nach Anspruch 4, wobei der mindestens eine Stellantrieb ein längliches Stellantriebselement umfasst, das ein erstes und ein zweites Ende umfasst und sich zwischen dem ersten und dem zweiten Ende des Behälters (14) erstreckt; und wobei eine oder mehrere der Verriegelungen (40) einen Kragen umfassen, der durch ein quer verlaufendes Stellantriebselement wirksam mit dem ersten Ende des länglichen Stellantriebselements verbunden ist.

6. System nach Anspruch 5, bei dem das System ein einziges längliches Stellantriebselement umfasst, das sich zwischen dem ersten und dem zweiten Ende des Behälters (14) erstreckt; alle Verriegelungen (40) einen Kragen umfassen; und alle Kragen durch ein quer verlaufendes Stellantriebselement mit dem ersten Ende des länglichen Stellantriebselements wirksam verbunden sind.

7. System nach einem der Ansprüche 3 bis 6, wobei die Verriegelung (40) von den selbstdichtenden Kupplungen getrennt ist; in eine Verriegelungsposition vorgespannt ist, um dadurch die Reservoirs (9, 109) des Behälters (14) in Fluidverbindung mit den Fahrzeugmotorfluidkreislaufsystemen (8, 108) zu halten, und fernbedienbar ist, um die Reservoirs (9, 109) des Behälters (14) von den Fluidumlaufsystemen (8, 108) des Fahrzeugmotors zu trennen.

8. System nach einem der Ansprüche 3 bis 7, wobei eine oder mehrere der selbstdichtenden Kupplungen mindestens eine der Verriegelungen (40) umfassen, die in eine Verriegelungsposition vorgespannt ist, um dadurch die Reservoirs (9, 109) des Behälters in Fluidverbindung mit den Fahrzeugmotorfluidkreislaufsystemen (8, 108) zu halten, und fernbedienbar ist, um die Reservoirs (9, 109) des Behälters (14) von den Fluidumlaufsystemen (8, 108) des Fahrzeugmotors zu trennen.

9. System nach Anspruch 8, das ferner mindestens eine weitere Verriegelung (40) umfasst, die von den selbstdichtenden Kupplungen getrennt ist; in eine Verriegelungsposition vorgespannt ist, um dadurch die Reservoirs (9, 109) des Behälters in Fluidverbindung mit den Fahrzeugmotorfluidkreislaufsystemen (8, 108) zu halten, und fernbedienbar ist, um die Reservoirs (9, 109) des Behälters (14) von den Fluidumlaufsystemen (8, 108) des Fahrzeugmotors zu trennen.

10. System nach einem der Ansprüche 3 bis 9, bei dem der Stellantrieb einen Hebel zum Betätigen des Stellantriebs aufweist.

11. System nach Anspruch 10, das einen Griff zum Tragen des Systems umfasst und an dem der Hebel schwenkbar oder verschiebbar angebracht ist.

12. System nach einem der Ansprüche 3, 4 und 8 und 9, bei dem der Stellantrieb mindestens ein elektromagnetisches Element umfasst, das dafür ausgelegt ist, mindestens eine der Verriegelungen zu betätigen.

13. System nach einem der Ansprüche 3 bis 12, bei dem jedes der Reservoirs (9, 109) des Behälters (14) einen Filter zum Filtern von Fluid umfasst.

14. System nach einem der Ansprüche 3 bis 13, bei dem mindestens einer der Anschlüsse (91, 92, 93, 191, 192, 193) ein Rückschlagventil umfasst.

15. System nach Anspruch 14, bei dem die Fluidauslassanschlüsse (91, 191) ein Rückschlagventil umfassen.

16. System nach einem der Ansprüche 3 bis 15, bei dem jedes Reservoir (9, 109) des Behälters eine Motorschmierölzusammensetzung enthält.

17. System nach einem der Ansprüche 3 bis 16, bei dem jedes Reservoir (9, 109) des Behälters (14) eine andere Motorschmierölzusammensetzung enthält.

18. System nach Anspruch 16 oder Anspruch 17, bei dem die Motorschmierölzusammensetzung eine Schmierölzusammensetzung für einen Verbrennungsmotor ist.

19. System nach Anspruch 16 oder Anspruch 17, bei dem die Motorschmierölzusammensetzung eine Schmierölzusammensetzung für einen Elektromotor ist.

20. System nach einem der Ansprüche 3 bis 16, bei dem jedes Reservoir (9, 109) des Behälters ein Wärmeaustauschfluid für einen Elektromotor enthält.

21. System nach einem der Ansprüche 3 bis 20, wobei die mehreren Fluidumlaufsysteme (8, 108) des Motors aus einem Kurbelgehäuse-Fluidumlaufsystem, einem Zylinderblock-Fluidumlaufsystem und einem Zylinderkopf-Fluidumlaufsystem ausgewählt sind.

22. System nach Anspruch 21, wobei der Behälter (14) drei Reservoirs umfasst, die in Fluidverbindung mit einem Kurbelgehäuse-Fluidumlaufsystem, einem Zylinderblock-Fluidumlaufsystem bzw. einem Zylinderkopf-Fluidumlaufsystem stehen.

23. System nach Anspruch 21 oder 22, bei dem die entsprechenden Anschlüsse am Fahrzeugmotor (4) selbstdichtende Anschlüsse sind.

24. Verfahren zum Zuführen von Fluid zu einem Fahrzeugmotor (4), der mehrere Fluidumlaufsysteme (8, 108) umfasst, wobei das Verfahren das Anschließen eines Fluidreservoirsystems nach einem der Ansprüche 16 bis 19 an die Fluidumlaufsysteme umfasst.

25. Behälteranordnung, die mehrere austauschbare Fluidbehälter (14) umfasst, die jeweils dafür ausgelegt sind, entfernbar in einem Dock (3) angeordnet zu sein, um einer Maschine (4) zugeordnetes Fluid zuzuführen, wobei jeder austauschbare Fluidbehälter (14) Folgendes umfasst:
ein Fluidreservoir (9, 109), das einen Fluidanschluss (90, 190) umfasst, der dafür ausgelegt ist, eine Fluidverbindung zwischen dem Reservoir und einem entsprechenden Fluidumlaufsystem (8, 108) bereitzustellen, das dem Motor (4) zugeordnet ist, wenn der austauschbare Fluidbehälter (14) im Dock (3) angeordnet ist; wobei die Behälteranordnung **dadurch gekennzeichnet ist, dass** sie ferner Folgendes umfasst:
eine Steuerung (1), die dafür konfiguriert ist, die Zufuhr von Fluid von einem oder mehreren der Vielzahl von Reservoirs (9, 109) zu dem entsprechenden Fluidumlaufsystem (8, 108) zu steuern;
wobei das Steuern der Fluidzufuhr auf Betriebsdaten basiert, die sich auf das Fluid oder das Fluidumlaufsystem (8, 108) beziehen.

26. Anordnung nach Anspruch 25, wobei sich das Fluid, das in dem Reservoir (9, 109) jedes Fluidbehälters (14) enthalten ist, von dem Fluid, das in dem Reservoir (9, 109) eines anderen Fluidbehälters (14) enthalten ist, unterscheidet.

## Revendications

1. Contenant de fluide remplaçable (14) agencé pour être logé de manière amovible dans un emplacement (3) afin de fournir du fluide associé à un moteur (4), le contenant de fluide remplaçable (14) comprenant :
une pluralité de réservoirs de fluide (9, 109), chaque réservoir comprenant un orifice de fluide (90, 190) agencé pour procurer une communication fluidique entre le réservoir (9, 109) et un système de circulation de fluide correspondant (8, 108) associé au moteur (4) lorsque le contenant de fluide remplaçable (14) est logé dans l'emplacement (3) ;
le contenant de fluide remplaçable étant **caractérisé par le fait qu'**il comprend en outre :
un organe de commande (1) configuré pour commander l'alimentation en fluide depuis un ou plusieurs réservoirs de la pluralité de réservoirs (9, 109) jusqu'au système de circulation de fluide correspondant (8, 108) ;
dans lequel la commande de l'alimentation en fluide est basée sur des données opérationnelles relatives au fluide ou au système de circulation de fluide (8, 108).

2. Contenant de fluide remplaçable de la revendication 1, dans lequel le fluide renfermé dans un réservoir de la pluralité de réservoirs (9, 109) est différent du fluide renfermé dans un autre réservoir de la pluralité de réservoirs (9, 109).

3. Système de réservoir de fluide pour un moteur de véhicule (4), ce moteur (4) comprenant une pluralité de systèmes de circulation de fluide (8, 108), le système de réservoir comprenant un contenant (14), dans lequel le contenant (14) comprend une pluralité de réservoirs de fluide (9, 109), chaque réservoir (9, 109) comprenant au moins un orifice d'entrée de fluide (92, 192), au moins un orifice de sortie de fluide (91, 191) et au moins un orifice d'évent (93, 193) et dans lequel chacun desdits orifices (91, 92, 93, 191, 192, 193) comprend un couplage à auto-scellement conçu pour un raccordement à un couplage correspondant (10, 12, 101, 120) sur le moteur de véhicule afin de raccorder ainsi chaque réservoir (9, 109) dudit contenant (14) en communication fluidique à un système de circulation de fluide correspondant (8, 108) du moteur (4) et dans lequel le système de réservoir comprend au moins un verrou (40) qui est conçu pour maintenir les réservoirs (9, 109) dudit contenant (14) en communication fluidique avec des systèmes de circulation de fluide de moteur de véhicule correspondants (8, 108) et le système de réservoir de fluide étant **caractérisé en ce qu'**il est exploitable à distance pour débrancher les réservoirs (9, 109) du contenant (14) par rapport auxdits systèmes de circulation de fluide de moteur de véhicule (8, 108) et dans lequel le système comprend au moins un actionneur qui est raccordé à un ou plusieurs desdits verrous (40) et est conçu pour opérer lesdits un ou plusieurs verrous (40).

4. Système tel que revendiqué dans la revendication 3 dans lequel ledit contenant (14) est allongé et dans lequel chaque groupe desdits orifices d'entrée (92, 192), de sortie (91, 191) et d'évent (93, 193) de chaque réservoir (9, 109) sont localisés au niveau d'une première extrémité commune dudit contenant (14) ; et ledit au moins un actionneur est apte à opérer au niveau d'une deuxième extrémité dudit contenant (14), laquelle est distale desdits orifices (91, 92, 93, 191, 192, 193) .

5. Système tel que revendiqué dans la revendication 4 dans lequel ledit au moins un actionneur comprend un élément d'actionneur allongé qui comprend des première et deuxième extrémités et s'étend entre lesdites première et deuxième extrémités dudit contenant (14) ; et un ou plusieurs desdits verrous (40) comprend/comprennent un collier qui est raccordé de manière fonctionnelle à ladite première extrémité dudit élément d'actionneur allongé par un élément d'actionneur transversal.

6. Système tel que revendiqué dans la revendication 5, ledit système comprenant un seul élément d'actionneur allongé s'étendant entre lesdites première et deuxième extrémités dudit contenant (14) ; la totalité desdits verrous (40) comprenant un collier ; et la totalité desdits colliers étant raccordés de manière fonctionnelle à ladite première extrémité dudit élément d'actionneur allongé par un élément d'actionneur transversal.

7. Système tel que revendiqué dans n'importe lesquelles des revendications 3 à 6 dans lequel ledit verrou (40) est séparé desdits couplages à auto-scellement ; est sollicité vers une position de verrouillage afin de maintenir ainsi les réservoirs (9, 109) dudit contenant (14) en communication fluidique avec lesdits systèmes de circulation de fluide de moteur de véhicule (8, 108) et est exploitable à distance pour débrancher lesdits réservoirs (9, 109) dudit contenant (14) par rapport auxdits systèmes de circulation de fluide de moteur de véhicule (8, 108).

8. Système tel que revendiqué dans n'importe lesquelles des revendications 3 à 7 dans lequel un ou plusieurs desdits couplages à auto-scellement comprend au moins un desdits verrous (40) qui est sollicité vers une position de verrouillage afin de maintenir ainsi les réservoirs (9, 109) dudit contenant en communication fluidique avec lesdits systèmes de circulation de fluide de moteur de véhicule (8, 108) et est exploitable à distance pour débrancher lesdits réservoirs (9, 109) dudit contenant (14) par rapport auxdits systèmes de circulation de fluide de moteur de véhicule (8, 108).

9. Système tel que revendiqué dans la revendication 8 qui comprend en outre au moins un verrou supplémentaire (40) qui est séparé desdits couplages à auto-scellement ; est sollicité vers une position de verrouillage afin de maintenir ainsi les réservoirs (9, 109) dudit contenant en communication fluidique avec lesdits systèmes de circulation de fluide de moteur de véhicule (8, 108) et est exploitable à distance pour débrancher les réservoirs (9, 109) dudit contenant (14) par rapport auxdits systèmes de circulation de fluide de moteur de véhicule (8, 108).

10. Système tel que revendiqué dans n'importe lesquelles des revendications 3 à 9 dans lequel ledit actionneur comprend un levier pour opérer ledit actionneur.

11. Système tel que revendiqué dans la revendication 10 qui comprend une poignée pour porter ledit système et ledit levier est monté de manière pivotante ou coulissante sur ladite poignée.

12. Système tel que revendiqué dans l'une quelconque des revendications 3, 4 et 8 et 9 dans lequel ledit actionneur comprend au moins un élément électromagnétique conçu pour opérer au moins un desdits verrous.

13. Système tel que revendiqué dans n'importe lesquelles des revendications 3 à 12 dans lequel chacun des réservoirs (9, 109) dudit contenant (14) comprend un filtre pour filtrer du fluide.

14. Système tel que revendiqué dans n'importe lesquelles des revendications 3 à 13 dans lequel au moins un desdits orifices (91, 92, 93, 191, 192, 193) comprend une soupape de non retour.

15. Système tel que revendiqué dans la revendication 14 dans lequel lesdits orifices de sortie de fluide (91, 191) comprennent une soupape de non retour.

16. Système tel que revendiqué dans n'importe lesquelles des revendications 3 à 15 dans lequel chaque réservoir (9, 109) du contenant contient une composition d'huile de lubrification de moteur.

17. Système tel que revendiqué dans n'importe lesquelles des revendications 3 à 16 dans lequel chaque réservoir (9, 109) du contenant (14) contient une différente composition d'huile de lubrification de moteur.

18. Système tel que revendiqué dans la revendication 16 ou la revendication 17 dans lequel ladite composition d'huile de lubrification de moteur est une composition d'huile de lubrification pour un moteur à combustion interne.

19. Système tel que revendiqué dans la revendication 16 ou la revendication 17 dans lequel la composition d'huile de lubrification de moteur est une composition d'huile de lubrification pour un moteur électrique.

20. Système tel que revendiqué dans l'une quelconque des revendications 3 à 16 dans lequel chaque réservoir (9, 109) dudit contenant contient un fluide d'échange thermique pour un moteur électrique.

21. Système tel que revendiqué dans n'importe lesquelles des revendications 3 à 20 dans lequel la pluralité de systèmes de circulation de fluide (8, 108) du moteur sont sélectionnés parmi un système de circulation de fluide de vilebrequin, un système de circulation de fluide de bloc-cylindres et un système de circulation de fluide de culasse.

22. Système tel que revendiqué dans la revendication 21 dans lequel le contenant (14) comprend trois réservoirs qui sont en communication fluidique avec un système de circulation de fluide de vilebrequin, un système de circulation de fluide de bloc-cylindres et un système de circulation de fluide de culasse, respectivement.

23. Système tel que revendiqué dans la revendication 21 ou la revendication 22 dans lequel lesdits orifices correspondants sur ledit moteur de véhicule (4) sont des orifices à auto-scellement.

24. Procédé de fourniture de fluide à un moteur de véhicule (4) comprenant une pluralité de systèmes de circulation de fluide (8, 108), ce procédé comprenant le raccordement auxdits systèmes de circulation de fluide, un système de réservoir de fluide tel que revendiqué dans l'une quelconque des revendications 16 à 19.

25. Assemblage de contenants, comprenant une pluralité de contenants de fluide remplaçables (14), chacun étant agencé pour être logé de manière amovible dans un emplacement (3) afin de fournir du fluide associé à un moteur (4), chaque contenant de fluide remplaçable (14) comprenant :
un réservoir de fluide (9, 109) comprenant un orifice de fluide (90, 190) agencé pour procurer une communication fluidique entre le réservoir et un système de circulation de fluide correspondant (8, 108) associé au moteur (4) lorsque le contenant de fluide remplaçable (14) est logé dans l'emplacement (3) ; l'assemblage de contenants étant **caractérisé en ce qu'**il comprend en outre
un organe de commande (1) configuré pour commander l'alimentation en fluide depuis un ou plusieurs réservoirs de la pluralité de réservoirs (9, 109) jusqu'au système de circulation de fluide correspondant (8, 108) ;
dans lequel la commande de l'alimentation en fluide est basée sur des données opérationnelles relatives au fluide ou au système de circulation de fluide (8, 108).

26. Assemblage tel que revendiqué dans la revendication 25, dans lequel le fluide renfermé dans le réservoir (9, 109) de chaque contenant de fluide (14) est différent du fluide renfermé dans le réservoir (9, 109) d'un autre contenant de fluide (14).
